# EUROPÄISCHE PATENTSCHRIFT

(11) **EP 3 490 856 B1**
(45) Veröffentlichungstag und Bekanntmachung des Hinweises auf die Patenterteilung: **31.03.2021**
(21) Anmeldenummer: 17730703.0
(22) Anmeldetag: 31.05.2017
(51) Int. Cl.: B60T 8/40

(54) **HYDRAULISCHE FAHRZEUGBREMSANLAGE**
HYDRAULIC VEHICLE BRAKE SYSTEM
SYSTÈME DE FREINAGE HYDRAULIQUE DE VÉHICULE

(30) Priorität: 01.08.2016 DE 102016214125
(43) Veröffentlichungstag der Anmeldung: 05.06.2019
(73) Patentinhaber: Robert Bosch GmbH, 70442 Stuttgart (DE)
(72) Erfinder: SCHUBERT, Peter, 74211 Leingarten (DE); KOEHLER, Ingo, Yokohama-shi Kanagawa 224-8501 (JP); SCHMITZ, David, 74395 Mundelsheim (DE)
(86) Internationale Anmeldenummer: PCT/EP2017/063193
(87) Internationale Veröffentlichungsnummer: WO 2018/024385

(56) Entgegenhaltungen:
- EP-A2- 0 265 623
- DE-A1- 3 511 535

## Beschreibung

Die Erfindung bezieht sich auf eine hydraulische Fahrzeugbremsanlage, die mit einem Pedalwegsimulator ausgestattet ist.

### Stand der Technik

In der DE 35 26 556 A1 wird eine hydraulische Fahrzeugbremsanlage beschrieben, die mit einem Pedalwegsimulator ausgestattet ist, in den bei einer Betätigung des Bremspedals Hydraulikfluid verdrängt wird. Der vom Fahrer ausgeübte Bremspedaldruck wird über eine Sensorik gemessen und der Steuerung einer elektrischen Pumpe zu Grunde gelegt, über die ein der Pedalbetätigung entsprechender Bremsdruck eingestellt wird.

Die EP 0 265 623 A2 offenbart eine hydraulische Fahrzeugbremsanlage mit einer Druckversorgungseinheit und einem Pedalwegsimulator, wobei zwischen der Druckversorgungseinheit und dem Pedalwegsimulator ein Schaltventil angeordnet ist. In einer ersten Schaltposition des Schaltventils ist der Pedalwegsimulator abgekoppelt, in einer zweiten Schaltposition des Schaltventils ist dagegen das Bremspedal mit dem Pedalwegsimulator hydraulisch verbunden, zugleich wird Hydraulikfluid über eine Pumpe der Druckversorgungseinheit den Radbremseinheiten zugeführt. Teil der Druckversorgungseinheit ist ein Pumpenmotor, wobei der Druckaufbau bei geöffnetem Ventil proportional zur Motordrehzahl des Pumpenmotors erfolgt.

### Offenbarung der Erfindung

Die erfindungsgemäße hydraulische Fahrzeugbremsanlage umfasst mindestens eine hydraulisch betätigbare Radbremseinheit, über die beispielsweise mithilfe eines Radbremszylinders an dem betreffenden Rad eine Bremskraft erzeugt wird. Der Radbremseinheit kann beispielsweise ein Einlass- und ein Auslassventil oder ein Druckregelventil zur Steuerung des Bremsfluids zur Radbremseinheit bzw. von dieser weg zugeordnet sein. Die hydraulische Fahrzeugbremsanlage ist in bekannter Weise mit mindestens einem Bremspedal ausgestattet, über das der Fahrer Bremskraft anfordert. Des Weiteren ist die Fahrzeugbremsanlage mit einem Pedalwegsimulator versehen, in den hinein bei der Betätigung des Bremspedals Bremsfluid gefördert wird.

Die hydraulische Fahrzeugbremsanlage kann mit genau einem Bremspedal oder mit zwei Bremspedalen ausgestattet sein.

Zwischen dem Bremspedal und dem Pedalwegsimulator befindet sich ein Schaltventil, das zwischen einer ersten Schaltposition, in der das Bremspedal mit dem Pedalwegsimulator verbunden und von der Radbremseinheit entkoppelt ist, und einer zweiten Schaltposition verstellbar ist, in der der Pedalwegsimulator vom Bremspedal entkoppelt und das Bremspedal mit der Radbremseinheit verbunden ist. In der ersten Schaltposition ist außerdem eine Druckversorgungseinheit wie zum Beispiel ein Druckspeicher, die unter Druck stehendes Bremsfluid aufweist, über ein einstellbares Ventil mit der Radbremseinheit verbunden. Das einstellbare Ventil ist mit dem Schaltventil identisch.

Diese Ausführung ermöglicht die Erzeugung von Bremskraft in zwei verschiedenen Betriebszuständen. Im ersten Betriebszustand, der der ersten Schaltposition des Schaltventils entspricht, wird bei einer Betätigung des Bremspedals Bremsfluid in den Pedalwegsimulator verschoben, und die Radbremseinheit wird von der Druckversorgungseinheit mit unter Druck stehendem Bremsfluid versorgt, um Bremskraft zu erzeugen. In der zweiten Bremsposition, die dem zweiten Schaltzustand des Schaltventils entspricht, ist dagegen die Druckversorgungseinheit von der Radbremseinheit entkoppelt, zugleich ist auch der Pedalwegsimulator von dem Bremspedal entkoppelt und das Bremspedal mit der Radbremseinheit verbunden, so dass bei einer Betätigung des Bremspedals Bremsfluid in die Radbremseinheit geleitet wird. Dieser Betriebszustand entspricht einem direkten Durchgriff des Bremspedals auf die Radbremseinheit, wobei der Druck des Bremsfluids ggf. über eine Verstärkungseinheit verstärkt werden kann.

Diese Ausführung ermöglicht es, die hydraulische Fahrzeugbremsanlage über das Bremsfluid aus der Druckversorgungseinheit zu versorgen und zu betreiben. Darüber hinaus ist keine Energieversorgung zur Druckerzeugung für das Bremsfluid erforderlich. Die Druckversorgungseinheit stellt einen Energiespeicher mit Hydraulikfluid dar, der ggf. auch für weitere Funktionen im Fahrzeug verwendet werden kann, insbesondere im Fall von Nutzfahrzeugen, z.B. für den Einsatz in Landmaschinen im Offroad-Betrieb. Beispielsweise kann eine derartige Druckversorgungseinheit in einem landwirtschaftlichen Nutzfahrzeug vorhanden sein. Bei der Verwendung der Druckversorgungseinheit für die hydraulische Fahrzeugbremsanlage wird das bereitstehende Energiepotenzial für eine Fahrzeugbremsung genutzt. Darüber hinaus kann die Druckversorgungseinheit aber auch für weitere Funktionen im Fahrzeug verwendet werden.

Diese Ausführung der hydraulischen Fahrzeugbremsanlage ermöglicht einen Betrieb, in dem bei ordnungsgemäßer Funktion aller elektrisch betätigbaren Komponenten der Fahrzeugbremsanlage, insbesondere der Ventile, sowie bei korrekter Funktion der Druckversorgungseinheit das Schaltventil so geschaltet ist, dass der erste Betriebszustand mit Beaufschlagung der Radbremseinheit über die Druckversorgungseinheit realisiert wird. Der zweite Betriebszustand, bei dem unmittelbar über das Bremspedal Druck im Bremsfluid in der Radbremseinheit aufgebaut wird, dient als passive Rückfallebene. Dementsprechend befindet sich das Schaltventil vorteilhafterweise im stromlosen Zustand in der zweiten Schaltposition, in welcher der Pedalwegsimulator entkoppelt und das Bremspedal mit der Radbremseinheit verbunden ist. Die Druckversorgungseinheit ist in der zweiten Schaltposition von der Radbremseinheit entkoppelt, so dass die Radbremseinheit ausschließlich über die Bremspedalbetätigung mit dem unter Druck stehenden Hydraulikfluid versorgt wird, wobei ggf. eine Bremskraftverstärkungseinheit zur Verstärkung des Bremsdrucks vorgesehen sein kann.

Vorteilhafterweise befindet sich zumindest in einer Verbindungsleitung, über die Bremsfluid zu der Radbremseinheit geleitet ist, ein Drucksensor zur Ermittlung des hydraulischen Bremsfluiddrucks. Es kann zweckmäßig sein, zusätzlich unmittelbar an der Radbremseinheit einen weiteren Drucksensor anzuordnen, über den der Bremsfluiddruck in der Radbremseinheit ermittelbar ist.

Ein weiteres Ventil befindet sich im Strömungsweg zwischen der Druckversorgungseinheit und der mindestens einer Radbremseinheit. Das Ventil, das beispielsweise als ein brake-by-wire-Ventil ausgeführt ist, steht im stromlosen Zustand in Sperrstellung und entkoppelt hierdurch die Druckversorgungseinheit von der mindestens einer Radbremseinheit.

Gemäß einer weiteren zweckmäßigen Ausführung umfasst die Fahrzeugbremsanlage zumindest zwei Radbremseinheiten, denen gegebenenfalls jeweils ein Einlass- und ein Auslassventil oder ein Druckregelventil zugeordnet sein kann, insbesondere an den beiden gegenüberliegenden Rädern einer Fahrzeugachse. In bevorzugter Ausführung umfasst die Fahrzeugbremsanlage zwei Bremskreise mit jeweils mindestens einer hydraulisch betätigbaren Radbremseinheit, vorzugsweise mit jeweils zwei Radbremseinheiten, wobei pro Bremskreis die beiden Radbremseinheiten entweder an den gegenüberliegenden Rädern an der gleichen Achse oder diagonal versetzt an gegenüberliegenden Achsen angeordnet sind. Des Weiteren ist der zweite Bremskreis hydraulisch an den ersten Bremskreis angeschlossen. Diese Ausführung ermöglicht es, im zweiten Betriebs- und Schaltzustand bei entkoppeltem Pedalwegsimulator beide Bremskreise über das Bremspedal mit Bremsfluid zu versorgen.

Es ist auch möglich, eine gemeinsame Druckversorgungseinheit für beide Bremskreise vorzusehen, aus dem im ersten Betriebs- und Schaltzustand beide Bremskreise mit dem unter Druck stehenden Bremsfluid versorgt werden. Es kann ggf. zweckmäßig sein, in der Verbindung zwischen dem ersten und dem zweiten Bremskreis ein hydraulisches Übersetzungsventil anzuordnen, in dem eine Druckänderung im zweiten Bremskreis gegenüber dem ersten Bremskreis durchgeführt wird, also eine Druckübersetzung mit einem höheren Druck im zweiten Bremskreis oder mit einer Druckuntersetzung mit einem niedrigeren Druck im zweiten Bremskreis, bezogen auf den ersten Bremskreis. Damit ist es beispielsweise möglich, im zweiten Betriebs- und Schaltzustand bei einer Betätigung des Bremspedals unterschiedliche Druckniveaus im ersten und im zweiten Bremskreis einzustellen. Gleiches gilt bei nur einer Druckversorgungseinheit für beide Bremskreise, der entweder mit dem ersten oder mit dem zweiten Bremskreis verbunden ist.

Für den Fall, dass jedem Bremskreis eine eigene Druckversorgungseinheit zugeordnet ist, kann ebenfalls ein hydraulisches Übersetzungsventil in der Verbindung zwischen den Bremskreisen angeordnet sein, insbesondere für den Fall, dass im zweiten Betriebszustand über eine Betätigung des Bremspedals ein hydraulischer Bremsdruck in den Radbremseinheiten beider Bremskreise erzeugt wird. Im ersten Betriebszustand, bei einer Versorgung der Radbremseinheiten über die jeweilige Druckversorgungseinheit, steht das hydraulisches Übersetzungsventil vorzugsweise in einer Sperrstellung, so dass die Bremskreise hydraulisch separiert sind. In dieser Stellung herrscht in jedem Bremskreis nur der Druck aus dee Druckversorgungseinheit, der sich unterscheiden oder auch gleich sein kann.

Die zusätzliche Druckversorgungseinheit im weiteren Bremskreis kann gegebenenfalls über ein weiteres Schaltventil an diesem Bremskreis angeschlossen, das im stromlosen Zustand die zusätzliche Druckversorgungseinheit vom weiteren Bremskreis entkoppelt. Das Schaltventil kann mit dem hydraulisches Übersetzungsventil zur Verbindung des zweiten mit dem ersten Kreis identisch sein. Das hydraulisches Übersetzungsventil ist im stromlosen Zustand in der Weise geschaltet, dass eine Strömungsverbindung zwischen den Bremskreisen offensteht.

Gemäß noch einer weiteren zweckmäßigen Ausführung ist das Auslassventil an der mindestens einen Radbremseinheit mit einem Vorratsbehälter strömungsverbunden, in den das Bremsfluid bei geöffnetem Auslassventil abströmt. Das Auslassventil ist vorteilhafterweise so ausgeführt, dass es im stromlosen Zustand den Vorratsbehälter von der Radbremseinheit entkoppelt. Hierdurch ist gewährleistet, dass in der Rückfallebene - dem zweiten Betriebszustand - bei einer Betätigung des Bremspedals das verschobene Bremsfluid in der Radbremseinheit verbleibt und nicht über das Auslassventil in den Vorratsbehälter abgeleitet wird.

Sofern zwei Bremskreise vorhanden sind, können diese entweder über die Auslassventile mit einem gemeinsamen Vorratsbehälter verbunden sein oder es ist pro Bremskreis ein Vorratsbehälter vorhanden.

Die Fahrzeugbremsanlage ist vorzugsweise mit einem Regel- bzw. Steuergerät zur Ansteuerung der einstellbaren Komponenten der Fahrzeugbremsanlage ausgestattet. In dem Regel- bzw. Steuergerät werden Signale von Sensoren der Fahrzeugbremsanlage verarbeitet und Stellsignale zur Ansteuerung der Komponenten in der Fahrzeugbremsanlage erzeugt.

Bei dem Fahrzeug, das mit der erfindungsgemäßen Fahrzeugbremsanlage ausgestattet ist, handelt es sich z.B. um ein Nutzfahrzeug, beispielsweise ein im Offroad-Betrieb einsetzbares Nutzfahrzeug oder landwirtschaftliches Fahrzeug, z.B. ein Traktor.

Mit der Fahrzeugbremsanlage können verschiedene Betriebsweisen durchgeführt werden. Gemäß einem ersten Verfahren zum Betrieb der Fahrzeugbremsanlage kann zur Realisierung eines Antiblockiersystems (ABS) fortlaufend auf der Grundlage von Sensorinformationen, insbesondere von Drehzahlsensoren eine Blockierneigung eines Rads ermittelt und das Bremsdruckniveau an der zugeordneten Radbremseinheit durch Schließen des Einlassventils und Öffnen des Auslassventils reduziert werden. Bei mehreren Radbremseinheiten können die jeweils zugeordneten Einlass- und Auslassventile unabhängig von den Ventilen der anderen Radbremseinheiten geschlossen und geöffnet werden.

Gemäß einem weiteren Verfahren zum Betrieb der Fahrzeugbremsanlage kann ein elektronisches Stabilitätsprogramm (ESP) zur Fahrzeugstabilisierung realisiert werden. Hierzu wird die Rotation des Fahrzeugs um die Hochachse ermittelt, insbesondere über einen Drehratensensor, und mit dem Fahrerwunsch verglichen, der aus Informationen eines Lenkwinkelsensors und der Drehzahlsensoren bestimmt werden kann. Bei einer Abweichung zwischen Fahrerwunsch und tatsächlicher Position des Fahrzeugs kann durch Öffnen bzw. Schließen der Einlass- und Auslassventile an mindestens einer Radbremseinheit, ggf. an mehreren Radbremseinheiten, das Fahrzeug stabilisiert werden.

Sowohl bei der Realisierung des Antiblockiersystems als auch des elektronischen Stabilitätsprogramms kann im ersten Betriebszustand auf das unter Druck stehende Bremsfluid in der Druckversorgungseinheit zurückgegriffen werden.

Dies gilt auch bei einem weiteren Verfahren zum Betrieb der Fahrzeugbremsanlage zur Realisierung einer aktiven Anhängerbremse, bei dem mindestens eine Radbremseinheit im Anhänger des Fahrzeugs über das Bremsfluid in der Druckversorgungseinheit gebremst wird.

Weitere Vorteile und zweckmäßige Ausführungen sind den weiteren Ansprüchen, der Figurenbeschreibung und den Zeichnungen zu entnehmen. Es zeigen:
- Fig. 1: ein Schaltschema einer hydraulischen Fahrzeugbremsanlage mit einem ersten Bremskreis für die Räder an der Hinterachse des Fahrzeugs,
- Fig. 2: die Fortsetzung des Schaltschemas für die Räder an der Vorderachse des Fahrzeugs.

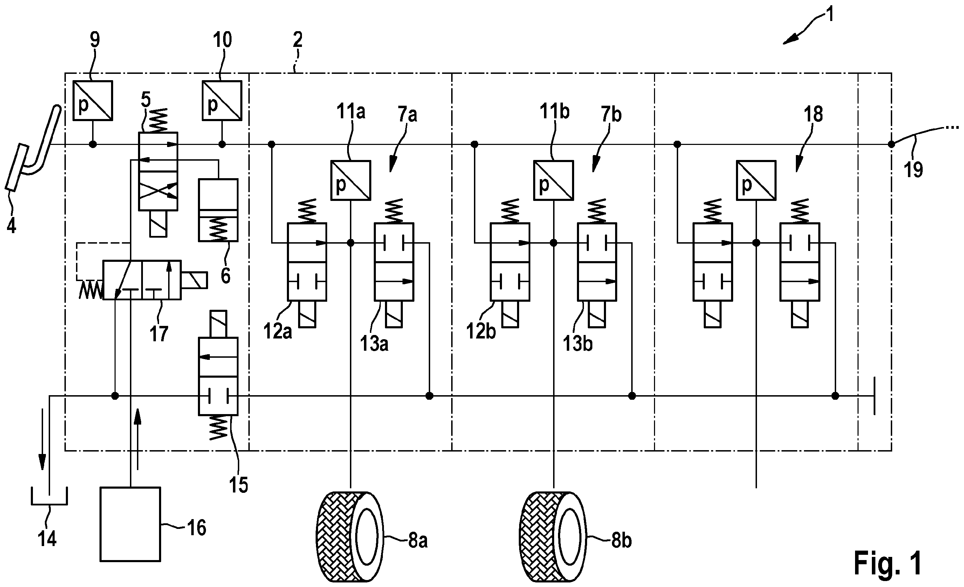

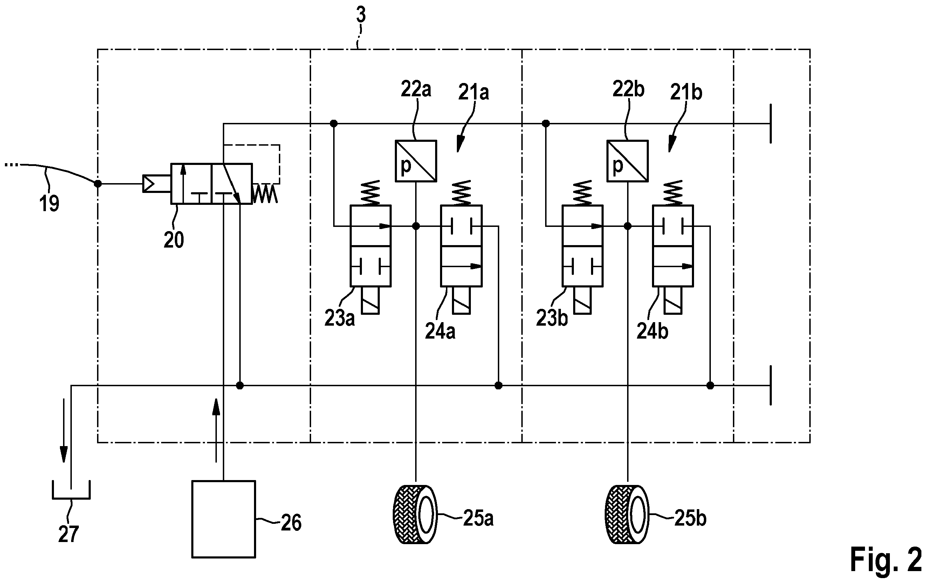

Die in den Figuren 1 und 2 dargestellte Fahrzeugbremsanlage 1, von der in Fig. 1 der Hinterachs-Bremskreis 2 und in Fig. 2 der Vorderachs-Bremskreis 3 dargestellt sind, ist beispielsweise in Nutzfahrzeugen wie z.B. landwirtschaftlichen Fahrzeugen verbaut. Die Fahrzeugbremsanlage 1 umfasst ein Bremspedal 4, das hydraulisch über ein Schaltventil 5 zum einen an einen Pedalwegsimulator 6 und zum anderen an Radbremseinheiten 7a, 7b an den Rädern 8a, 8b der Hinterachse verbunden ist.

Zwischen dem Bremspedal 4 und dem Schaltventil 5 befindet sich ein Drucksensor 9, ein weiterer Drucksensor 10 ist in dem Schaltventil 5 und den Radbremseinheiten 7a, 7b angeordnet. Des Weiteren ist jeder Radbremseinheit 7a, 7b ein Drucksensor 11a, 11b zugeordnet.

Jede Radbremseinheit 7a, 7b weist ein Einlassventil 12a, 12b und ein Auslassventil 13a, 13b an einem Radbremszylinder auf, wobei über die Ventile Bremsfluid hin zum Radbremszylinder bzw. von diesem weg geleitet wird. Die Auslassventile 13a, 13b sind über eine gemeinsame Rückströmleitung mit einem Vorratsbehälter 14 verbunden, in den, wie mit dem Pfeil angedeutet, bei geöffnetem Auslassventil Bremsfluid zurückströmt. In der Rückführleitung ist ein Ventil 15 angeordnet, das im stromlosen Zustand in seiner Sperrstellung steht und die Rückströmung zum Vorratsbehälter 14 unterbricht.

Der Fahrzeugbremsanlage 1 ist außerdem eine Druckversorgungseinheit 16 mit unter Druck stehendem Bremsfluid zugeordnet, der über ein brake-by-wire-Ventil 17 mit dem Schaltventil 5 verbunden ist. Das brake-by-wire-Ventil 17 steht im stromlosen Zustand in seiner den Strömungsfluss von der Druckversorgungseinheit 16 unterbrechenden Sperrposition und im bestromten Zustand in der den Strömungsfluss ermöglichenden Öffnungsposition, in der über das Schaltventil 5 eine Strömungsverbindung von der Druckversorgungseinheit 16 zu den Radbremseinheiten 7a, 7b ermöglicht wird. Das Schaltventil 5 befindet sich im stromlosen Zustand in einer den Pedalwegsimulator 6 entkoppelnden Stellung, wobei zugleich das Bremspedal 4 mit den Radbremseinheiten 7a, 7b verbunden ist. Im bestromten Zustand steht dagegen das Schaltventil in einer Schaltposition, in der der Pedalwegsimulator mit dem Bremspedal 4 gekoppelt ist, so dass bei einer Betätigung des Bremspedals 4 Bremsfluid in den Pedalwegsimulator 6 verschoben wird. Zugleich ist eine Strömungsverbindung zwischen dem brake-by-wire-Ventil 17 und den Radbremseinheiten 7a, 7b offen, so dass das Bremsfluid aus der Druckversorgungseinheit 16 über das brake-by-wire-Ventil 17 und das Schaltventil 15 zu den Radbremseinheiten 7a, 7b gelangt.

Optional ist an den ersten Bremskreis 2 eine weitere Radbremseinheit 18 angekoppelt, die sich beispielsweise in einem Anhänger des Fahrzeugs befindet, so dass die Radbremseinheit 18 in gleicher Weise wie die Radbremseinheiten 7a und 7b an den Hinterrädern des Fahrzeugs mit Bremsfluid versorgt wird.

Der erste Bremskreis 2 für die Hinterachse des Fahrzeugs ist über eine hydraulische Verbindungsleitung 19 mit dem zweiten Bremskreis 3 für die Vorderachse des Fahrzeugs verbunden. Zwischen dem ersten und dem zweiten Bremskreis 2,3 befindet sich ein hydraulisches Übersetzungsventil 20, über das eine Druckübersetzung, ggf. eine Druckuntersetzung zwischen dem ersten und dem zweiten Bremskreis 2, 3 durchgeführt werden kann. Der zweite Bremskreis 3 umfasst Radbremseinheiten 21a, 21b mit jeweils einem Drucksensor 22a, 22b und Einlassventilen 23a und 23b sowie Auslassventilen 24a und 24b. Die Bremszylinder der Radbremseinheiten 21a und 21b bremsen die Vorderräder 25a, 25b des Fahrzeugs ab.

Dem zweiten Bremskreis 3 für die Vorderachse des Fahrzeugs ist eine weitere Druckversorgungseinheit 26 mit unter Druck stehendem Bremsfluid zugeordnet, der über das hydraulische Übersetzungsventil 20 mit den Radbremseinheiten 21a, 21b an der Vorderachse strömungsverbunden ist. Das hydraulische Übersetzungsventil 20 kann eine die Druckversorgungseinheit 26 entkoppelnde und zugleich eine die Bremskreise 2 und 3 hydraulisch verbindende Position einnehmen, so dass Bremsfluid aus dem Bremskreis 2 über das Übersetzungsventil 20 in den Bremskreis 3 überströmt. In einer weiteren Position des hydraulischen Übersetzungsventils 20 ist dagegen die Verbindung zwischen den Bremskreisen 2 und 3 gesperrt und zugleich die Strömungsverbindung zwischen der zweiten Druckversorgungseinheit 26 und den Radbremseinheiten 21a, 21b geöffnet.

Die Auslassventile 24a, 24b der Radbremseinheiten 21a, 21b sind über eine Rücklaufleitung mit einem weiteren Vorratsbehälter 27 verbunden, in den das Bremsfluid bei geöffneten Auslassventilen 24a, 24b abströmt.

Im Normalfall, bei ordnungsgemäßer Funktion ohne Ausfall einer Komponente, wird das Bremsfluid bei einer Betätigung des Bremspedals 4 aus den Druckversorgungseinheiten 16, 26 in die zugeordneten Bremskreise 2, 3 zu den Radbremseinheiten 7a, 7b und 22a, 22b geleitet. Über eine Ansteuerung der zugeordneten Einlass- und Auslassventile können verschiedene Funktionen realisiert werden, beispielsweise im Rahmen von Fahrerassistenzsystemen, z.B. ein Antiblockiersystem oder ein elektronisches Stabilitätsprogramm, wofür zusätzliche Informationen aus Sensoren im Fahrzeug, z.B. Drehzahlsensoren oder Drehratensensoren ausgewertet werden. Die Bewegung des Bremspedals führt zu einer Verschiebung von Bremsfluid in den Pedalwegsimulator 6. Die Bremspedalbetätigung kann sensorisch erfasst werden und führt zu einer entsprechenden Ansteuerung der Einlass- und Auslassventile, um die gewünschte Bremsleistung aufzubringen.

Im Ausführungsbeispiel ist für jeden Bremskreis 2, 3 jeweils eine Druckversorgungseinheit 16, 26 vorgesehen. Die beiden Bremskreise 2, 3 können aus den beiden Druckversorgungseinheiten 16, 26 mit gleichem oder unterschiedlichem Bremsfluid und/oder gleichem oder unterschiedlichem Bremsdruck versorgt werden.

In einer alternativen Ausführung ist es auch möglich, auf den zweiten Bremsspeicher 26 im Bremskreis 3 zu verzichten und stattdessen auch in dem Betriebszustand, bei dem die Radbremseinheiten im ersten Bremskreis 2 aus der Druckversorgungseinheit 16 gespeist werden, die Radbremseinheiten an dem zweiten Bremskreis 3 ebenfalls aus der Druckversorgungseinheit 16 zu versorgen. In diesem Fall kann es zweckmäßig sein, für die Realisierung eines sich unterscheidenden Bremsdrucks an den Radbremseinheiten 21a, 21b des zweiten Bremskreises 3 eine Druckübersetzung über das Übersetzungsventil 20 durchzuführen.

Bei einem Ausfall einer elektrisch ansteuerbaren Komponente bzw. einer Druckversorgungseinheit wird die passive Rückfallebene aktiv, indem die Ventile in ihren stromlosen Zustand versetzt werden, in welchem die Betätigung des Bremspedals 4 unmittelbar zu einer Druckerhöhung des Bremsfluids an den Radbremseinheiten 7a, 7b sowohl im ersten Bremskreis 2 als auch der Radbremseinheiten 21a, 21b im zweiten Bremskreis 3 führt.

## Patentansprüche

1. Hydraulische Fahrzeugbremsanlage mit mindestens einem Bremspedal (4) und einem Pedalwegsimulator (6) sowie mit mindestens einer hydraulisch betätigbaren Radbremseinheit (7a, 7b), mit einem elektrisch betätigbaren Schaltventil (5) zwischen dem Bremspedal (4) und dem Pedalwegsimulator (6), wobei das Schaltventil (5) zwischen einer ersten Schaltposition, in der das Bremspedal (4) mit dem Pedalwegsimulator (6) verbunden und von der Radbremseinheit (7a, 7b) entkoppelt ist, und einer zweiten Schaltposition verstellbar ist, in der das Bremspedal (4) vom Pedalwegsimulator (6) entkoppelt und das Bremspedal (4) mit der Radbremseinheit (7a, 7b) verbunden ist, wobei in der ersten Schaltposition zugleich eine Druckversorgungseinheit (16) über ein elektrisch betätigbares, einstellbares Ventil (5), das mit dem Schaltventil (5) identisch ist, mit der Radbremseinheit (7a, 7b) verbindbar ist, **dadurch gekennzeichnet, dass** im Strömungsweg zwischen der Druckversorgungseinheit (16) und der mindestens einen Radbremseinheit (7a, 7b) ein elektrisch betätigbares Ventil (17) angeordnet ist, das im stromlosen Zustand die Druckversorgungseinheit (16) von der Radbremseinheit (7a, 7b) entkoppelt, wobei in der ersten Schaltposition des Schaltventils (5) bei einer Betätigung des Bremspedals (4) Bremsfluid in den Pedalwegsimulator (6) verschoben und die Radbremseinheit (7a, 7b) von der Druckversorgungseinheit (16) mit unter Druck stehendem Bremsfluid versorgt wird, um Bremskraft zu erzeugen, und in dem zweiten Schaltzustand des Schaltventils (5) die Druckversorgungseinheit (16) von der Radbremseinheit (7a, 7b) entkoppelt und zugleich der Pedalwegsimulator (6) von dem Bremspedal (4) entkoppelt und das Bremspedal (4) mit der Radbremseinheit (7a, 7b) verbunden ist, so dass bei einer Betätigung des Bremspedals (4) Bremsfluid in die Radbremseinheit (7a, 7b) geleitet wird.

2. Fahrzeugbremsanlage nach Anspruch 1, **dadurch gekennzeichnet, dass** das Schaltventil (5) im stromlosen Zustand in der zweiten Schaltposition steht, in der der Pedalwegsimulator (6) entkoppelt und das Bremspedal (4) mit der Radbremseinheit (7a, 7b) verbunden ist.

3. Fahrzeugbremsanlage nach einem der Ansprüche 1 oder 2, **dadurch gekennzeichnet, dass** die Fahrzeugbremsanlage (1) zwei Bremskreise (2, 3) mit jeweils mindestens einer hydraulisch betätigbaren Radbremseinheit (7a, 7b, 21a, 21b) umfasst und dass der zweite Bremskreis (3) hydraulisch an den ersten Bremskreis (2) angeschlossen ist.

4. Fahrzeugbremsanlage nach Anspruch 3, **dadurch gekennzeichnet, dass** der zweite Bremskreis (3) über ein hydraulisches Übersetzungsventil (20) an den ersten Bremskreis (2) angeschlossen ist.

5. Fahrzeugbremsanlage nach Anspruch 3 oder 4, **dadurch gekennzeichnet, dass** der zweite Bremskreis (3) von einer weiteren unabhängigen Druckversorgungseinheit (26) betreibbar ist.

6. Fahrzeugbremsanlage nach einem der Ansprüche 1 bis 5, **dadurch gekennzeichnet, dass** ein elektrisch betätigbares Auslassventil (13a, 13b) in der Radbremseinheit (7a, 7b) mit einem Vorratsbehälter (14) strömungsverbunden ist.

7. Fahrzeugbremsanlage nach Anspruch 6, **dadurch gekennzeichnet, dass** das Auslassventil (13a, 13b) in der Radbremseinheit (7a, 7b) im stromlosen Zustand den Vorratsbehälter (14) von der Radbremseinheit (7a, 7b) entkoppelt.

8. Fahrzeugbremsanlage nach einem der Ansprüche 1 bis 7, mit einem Regel- bzw. Steuergerät zur Ansteuerung der einstellbaren Komponenten der Fahrzeugbremsanlage (1).

9. Fahrzeug, insbesondere Nutzfahrzeug, mit einer Fahrzeugbremsanlage (1) nach einem der Ansprüche 1 bis 8.

10. Verfahren zum Betrieb der Fahrzeugbremsanlage nach einem der Ansprüche 1 bis 8, bei dem zur Realisierung eines Antiblockiersystems (ABS) eine Blockierneigung eines Rades (8a, 8b, 25a, 25b) ermittelt und das Bremsdruckniveau an der zugeordneten Radbremseinheit (7a, 7b, 21a, 21b) durch Schließen eines Einlassventils (12a, 12b, 23a, 23b) und Öffnen eines Auslassventils (13a, 13b, 24a, 24b) reduziert wird.

11. Verfahren zum Betrieb der Fahrzeugbremsanlage nach einem der Ansprüche 1 bis 8, bei dem zur Realisierung eines Elektronischen Stabilitätsprogramms (ESP) die Rotation des Fahrzeugs um die Hochachse ermittelt und mit dem Fahrerwunsch, ermittelt aus Lenkwinkel- und Drehzahlsensoren, verglichen wird, wobei im Fall einer Abweichung durch Öffnen bzw. Schließen von Einlass- (12a, 12b, 23a, 23b) und Auslassventilen (13a, 13b, 24a, 24b) in mindestens einer Radbremseinheit (7a, 7b, 21a, 21b) das Fahrzeug stabilisiert wird.

12. Verfahren zum Betrieb der Fahrzeugbremsanlage nach einem der Ansprüche 1 bis 8, bei dem mindestens eine Radbremseinheit (18) in einem Anhänger des Fahrzeugs über das Bremsfluid in der Druckversorgungseinheit (16) gebremst wird.

## Claims

1. Hydraulic vehicle brake system having at least one brake pedal (4) and a pedal travel simulator (6), and also having at least one hydraulically actuable wheel brake unit (7a, 7b), having an electrically actuable switching valve (5) between the brake pedal (4) and the pedal travel simulator (6), wherein the switching valve (5) is adjustable between a first switching position, in which the brake pedal (4) is connected to the pedal travel simulator (6) and is decoupled from the wheel brake unit (7a, 7b), and a second switching position, in which the brake pedal (4) is decoupled from the pedal travel simulator (6) and the brake pedal (4) is connected to the wheel brake unit (7a, 7b), wherein, in the first switching position, a pressure supply unit (16) is connectable at the same time to the wheel brake unit (7a, 7b) via an electrically actuable, adjustable valve (5) which is identical to the switching valve (5), **characterized in that** an electrically actuable valve (17) is arranged in the flow path between the pressure supply unit (16) and the at least one wheel brake unit (7a, 7b), said valve, in the currentless state, decoupling the pressure supply unit (16) from the wheel brake unit (7a, 7b), wherein, in the first switching position of the switching valve (5), when the brake pedal (4) is actuated, brake fluid is displaced into the pedal travel simulator (6) and the wheel brake unit (7a, 7b) is supplied with pressurized brake fluid by the pressure supply unit (16) in order to generate braking force, and, in the second switching state of the switching valve (5), the pressure supply unit (16) is decoupled from the wheel brake unit (7a, 7b) and at the same time the pedal travel simulator (6) is decoupled from the brake pedal (4) and the brake pedal (4) is connected to the wheel brake unit (7a, 7b) such that, when the brake pedal (4) is actuated, brake fluid is conducted into the wheel brake unit (7a, 7b).

2. Vehicle brake system according to Claim 1, **characterized in that** the switching valve (5) in the currentless state is in the second switching position in which the pedal travel simulator (6) is decoupled and the brake pedal (4) is connected to the wheel brake unit (7a, 7b).

3. Vehicle brake system according to either of Claims 1 and 2, **characterized in that** the vehicle brake system (1) comprises two brake circuits (2, 3) each having at least one hydraulically actuable wheel brake unit (7a, 7b, 21a, 21b), and **in that** the second brake circuit (3) is hydraulically connected to the first brake circuit (2).

4. Vehicle brake system according to Claim 3, **characterized in that** the second brake circuit (3) is connected to the first brake circuit (2) via a hydraulic intensifying valve (20).

5. Vehicle brake system according to Claim 3 or 4, **characterized in that** the second brake circuit (3) is operable by a further independent pressure supply unit (26).

6. Vehicle brake system according to one of Claims 1 to 5, **characterized in that** an electrically actuable outlet valve (13a, 13b) in the wheel brake unit (7a, 7b) is connected in terms of flow to a supply container (14).

7. Vehicle brake system according to Claim 6, **characterized in that** the outlet valve (13a, 13b) in the wheel brake unit (7a, 7b) in the currentless state decouples the supply container (14) from the wheel brake unit (7a, 7b).

8. Vehicle brake system according to one of Claims 1 to 7, having a regulating or control device for activating the adjustable components of the vehicle brake system (1).

9. Vehicle, in particular utility vehicle, having a vehicle brake system (1) according to one of Claims 1 to 8.

10. Method for operating the vehicle brake system according to one of Claims 1 to 8, in which, in order to realize an anti-lock system (ABS), a locking tendency of a wheel (8a, 8b, 25a, 25b) is determined, and the brake pressure level at the associated wheel brake unit (7a, 7b, 21a, 21b) is reduced by closing an inlet valve (12a, 12b, 23a, 23b) and opening an outlet valve (13a, 13b, 24a, 24b) .

11. Method for operating the vehicle brake system according to one of Claims 1 to 8, in which, in order to realize an electronic stability program (ESP), the rotation of the vehicle about the vertical axis is determined and is compared with the driver requirement, determined from steering angle and rotational speed sensors, wherein, in the event of a deviation, the vehicle is stabilized by opening or closing inlet valves (12a, 12b, 23a, 23b) and outlet valves (13a, 13b, 24a, 24b) in at least one wheel brake unit (7a, 7b, 21a, 21b).

12. Method for operating the vehicle brake system according to one of Claims 1 to 8, in which at least one wheel brake unit (18) in a trailer of the vehicle is braked via the brake fluid in the pressure supply unit (16).

## Revendications

1. Système de freinage hydraulique de véhicule, comprenant au moins une pédale de frein (4) et un simulateur de course de pédale (6), ainsi qu'au moins une unité de frein sur roue (7a, 7b) à actionnement hydraulique, et une soupape de commande (5) à actionnement électrique entre la pédale de frein (4) et le simulateur de course de pédale (6), dans lequel la soupape de commande (5) peut être déplacée entre une première position de commande, dans laquelle la pédale de frein (4) est reliée au simulateur de course de pédale (6) et désaccouplée de l'unité de frein sur roue (7a, 7b), et une deuxième position de commande, dans laquelle la pédale de frein (4) est désaccouplée du simulateur de course de pédale (6) et la pédale de frein (4) est reliée à l'unité de frein sur roue (7a, 7b), dans lequel, dans la première position de commande, une unité d'alimentation en pression (16) peut en même temps être reliée à l'unité de frein sur roue (7a, 7b) par l'intermédiaire d'une soupape réglable (5) à actionnement électrique qui est identique à la soupape de commande (5), **caractérisé en ce que** sur le chemin d'écoulement entre l'unité d'alimentation en pression (16) et ladite au moins une unité de frein sur roue (7a, 7b) est disposée une soupape (17) à actionnement électrique qui désaccouple l'unité d'alimentation en pression (16) de l'unité de frein sur roue (7a, 7b) à l'état sans courant, dans lequel, dans la première position de commande de la soupape de commande (5), lors d'un actionnement de la pédale de frein (4), un fluide de freinage est poussé dans le simulateur de course de pédale (6) et l'unité de frein sur roue (7a, 7b) est alimentée en fluide de freinage sous pression par l'unité d'alimentation en pression (16) afin de produire une force de freinage, et dans le deuxième état de commande de la soupape de commande (5), l'unité d'alimentation en pression (16) est désaccouplée de l'unité de frein sur roue (7a, 7b), et en même temps, le simulateur de course de pédale (6) est désaccouplé de la pédale de frein (4) et la pédale de frein (4) est reliée à l'unité de frein sur roue (7a, 7b) de sorte que lors d'un actionnement de la pédale de frein (4), du fluide de freinage est amené dans l'unité de frein sur roue (7a, 7b).

2. Système de freinage de véhicule selon la revendication 1, **caractérisé en ce que** la soupape de commande (5) se trouve à l'état sans courant dans la deuxième position de commande dans laquelle le simulateur de course de pédale (6) est désaccouplé et la pédale de frein (4) est reliée à l'unité de frein sur roue (7a, 7b).

3. Système de freinage de véhicule selon l'une quelconque des revendications 1 et 2, **caractérisé en ce que** le système de freinage de véhicule (1) comprend deux circuits de freinage (2, 3) respectivement dotés d'au moins une unité de frein sur roue (7a, 7b, 21a, 21b) à actionnement hydraulique, et **en ce que** le deuxième circuit de freinage (3) est raccordé au premier circuit de freinage (2) de manière hydraulique.

4. Système de freinage de véhicule selon la revendication 3, **caractérisé en ce que** le deuxième circuit de freinage (3) est raccordé au premier circuit de freinage (2) par une soupape de rapport hydraulique (20) .

5. Système de freinage de véhicule selon la revendication 3 ou 4, **caractérisé en ce que** le deuxième circuit de freinage (3) peut être exploité par une autre unité d'alimentation en pression (26) indépendante.

6. Système de freinage de véhicule selon l'une quelconque des revendications 1 à 5, **caractérisé en ce qu'**une soupape de décharge (13a, 13b) à actionnement électrique est en communication d'écoulement avec un réservoir (14) dans l'unité de frein sur roue (7a, 7b).

7. Système de freinage de véhicule selon la revendication 6, **caractérisé en ce que** la soupape de décharge (13a, 13b) dans l'unité de frein sur roue (7a, 7b) désaccouple le réservoir (14) de l'unité de frein sur roue (7a, 7b) à l'état sans courant.

8. Système de freinage de véhicule selon l'une quelconque des revendications 1 à 7, comprenant un appareil de régulation ou de commande pour piloter les composants réglables du système de freinage de véhicule (1) .

9. Véhicule, en particulier véhicule utilitaire, comprenant un système de freinage de véhicule (1) selon l'une quelconque des revendications 1 à 8.

10. Procédé d'exploitation du système de freinage de véhicule selon l'une quelconque des revendications 1 à 8, dans lequel, pour réaliser un système antiblocage (ABS), une inclinaison de blocage d'une roue (8a, 8b, 25a, 25b) est déterminée, et le niveau de pression de freinage à l'unité de frein sur roue (7a, 7b, 21a, 21b) associée est réduit par la fermeture d'une soupape d'admission (12a, 12b, 23a, 23b) et l'ouverture d'une soupape de décharge (13a, 13b, 24a, 24b).

11. Procédé d'exploitation du système de freinage de véhicule selon l'une quelconque des revendications 1 à 8, dans lequel, pour réaliser un programme de stabilité électronique (ESP), la rotation du véhicule autour de l'axe vertical est déterminée et comparée au souhait du conducteur, déterminé à partir de capteurs d'angle de braquage et de vitesse de rotation, dans lequel, en cas de différence, le véhicule est stabilisé par l'ouverture ou la fermeture de soupapes d'admission (12a, 12b, 23a, 23b) et de soupapes de décharge (13a, 13b, 24a, 24b) dans au moins une unité de frein sur roue (7a, 7b, 21a, 21b).

12. Procédé d'exploitation du système de freinage de véhicule selon l'une quelconque des revendications 1 à 8, dans lequel au moins une unité de frein sur roue (18) dans une remorque du véhicule est freinée par l'intermédiaire du fluide de freinage dans l'unité d'alimentation en pression (16).
